# EUROPEAN PATENT SPECIFICATION

(11) **EP 3 333 505 B1**
(45) Date of publication and mention of the grant of the patent: **03.11.2021**
(21) Application number: 17205299.5
(22) Date of filing: 04.12.2017
(51) Int. Cl.: F25B 21/00

(54) **ELECTROCALORIC SYSTEM**
ELEKTROKALORISCHES SYSTEM
SYSTÈME ÉLECTROCALORIQUE

(30) Priority: 12.12.2016 US 201615375713
(43) Date of publication of application: 13.06.2018
(60) Divisional application: 19155560.6
(73) Proprietor: Palo Alto Research Center Incorporated, Palo Alto, California 94304 (US)
(72) Inventor: SCHWARTZ, David E., San Carlos, CA California 94070 (US); WANG, Yunda, Milpitas, CA California 95035 (US)
(74) Representative: Gill Jennings & Every LLP

(56) References cited:
- EP-A2- 2 957 843
- US-A1- 2015 033 762

## Description

### TECHNICAL FIELD

The present disclosure is directed to electrocaloric cooling and/or heating devices and methods related to such devices.

### BACKGROUND

In recent years, several technologies have been investigated for heat pump, air conditioning, and/or other energy conversion applications. These technologies include the use of electrocaloric energy conversion which may lead to enhanced energy efficiency, compactness, reduced noise levels, as well as a reduction in environmental impact. US 2015/033762 A1 discloses an electrocaloric cooling/heating system which is operated as follows: moving a second layer of electrocaloric capacitors a first direction relative to a first layer of electrocaloric capacitors, the capacitors of the first layer of electrocaloric capacitors separated by a first insulation region and the capacitors of the second layer of electrocaloric capacitors separated by a second insulation region; increasing an electric field on the first layer of electrocaloric capacitors while lowering an electric field on the second layer of electrocaloric capacitors whereby heat is transferred from the first layser of electrocaloric capacitors to the second layer of electrocaloric capacitors; moving the second layer of electrocaloric capacitors in a direction opposite the first direction relative to the first layer of electrocaloric capacitors; and increasing an electric field on the second layer of electrocaloric capacitors while lowering an electric field on the first layer of electrocaloric capacitors whereby heat is transferred from the second layer of electrocaloric capacitors to the first layer of electrocaloric capacitors.

### SUMMARY

The invention provides a system according to claim 1 and a method of cooling according to claim 3.

The above summary is not intended to describe each embodiment or every implementation. A more complete understanding will become apparent and appreciated by referring to the following detailed description and claims in conjunction with the accompanying drawings.

### BRIEF DESCRIPTION OF THE DRAWINGS

FIGS. 1A - 1C illustrate a system for electrocaloric cooling via active regeneration in accordance with various embodiments disclosed herein;
FIGS. 2A - 2B illustrate a system for electrocaloric cooling via active regeneration in accordance with various embodiments disclosed herein;
FIGS. 3A - 3B illustrate examples of waveforms that may be associated with the system for electrocaloric cooling via active regeneration in accordance with various embodiments disclosed herein;
FIGS. 4A - 4B illustrate a system for electrocaloric cooling via active regeneration incorporating a plurality of stacked electrocaloric capacitors in accordance with various embodiments disclosed herein;
FIGS. 5A - 5B illustrate a system for electrocaloric cooling via active regeneration incorporating solid coupling blocks in accordance with various embodiments disclosed herein;
FIGS. 6A - 6B illustrate an alternate configuration of a system for electrocaloric cooling via active regeneration in accordance with various embodiments disclosed herein;
FIGS. 7A - 7C illustrate a system for pyroelectric energy harvesting with active regeneration in accordance with various embodiments disclosed herein;
FIGS. 8A -8E illustrate the process of using heat switches for an electrocaloric cooling system in according to various implementations;
FIGS. 9A -9B illustrate an EC capacitor system utilizing thermal switches and/or active regeneration in accordance with embodiments described herein.;
FIGS. 10A-10D show a EC capacitor system having insulation regions and rows that are configured to move laterally with respect to each other according to some aspects;
FIGS. 11A and 11B show embodiments having a plurality of first EC capacitor rows 1112 and a plurality of second EC capacitor rows in accordance with various embodiments described herein;
FIG. 11C illustrates a three dimensional array of a first EC capacitor layer and a second EC capacitor layer according to some implementations; and
FIG. 12 illustrates a process for cooling using an EC capacitor system in accordance with various embodiments described herein.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

The electrocaloric effect (ECE) and the pyroelectric effect refer to the same phenomenon: a change in the temperature of a material associated with a changing electric field. When a material is used in a cooling or refrigeration application, the term "electrocaloric" is generally used. When a material is used for generating electricity or mechanical work from heat (i.e., as a heat engine), the term "pyroelectric" is used.

Capacitors that are used in an electrocaloric system can include electrocaloric dielectrics such as BaTiO3, PLZT, and/or PbBaZrO₃. Certain materials, notably polymers and co-polymers based on P(VDF-TrFE) and ceramic materials such as lead zirconate titanate (PZT), have been shown to have a large ECE. In accordance with embodiments described herein, capacitor modules can be capable of exhibiting a pyroelectric effect, which refers to the change in the surface charge on a capacitor in response to a temperature change and can be used to create a heat engine.

To use a material that exhibits ECE (an "EC material") in a cooling device, the temperature changes induced by applying electric fields can be synchronized with some means of creating directionality in the heat flux such that heat is extracted from one side of the device and delivered to another. One means of doing this is with thermal switches that alternately create high thermal conductance paths on either side of an EC capacitor. Another means is with regeneration. According to various implementations, a combination of thermal switches and active regeneration can be used.

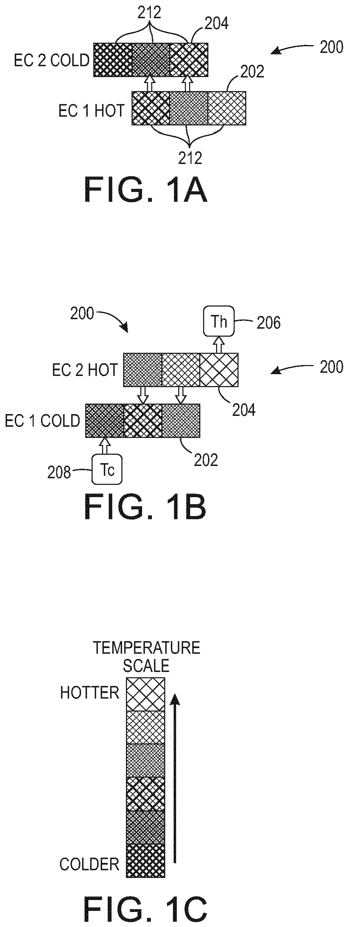

Referring now to FIGS. 1A - 1C, a schematic illustrating a system 200 for electrocaloric cooling via active regeneration may be appreciated. The system 200 provides a first EC capacitor 202 and a second EC capacitor 204. The electric fields applied to this second EC capacitor 204 are complementary to the electric fields applied to the first EC capacitor 202 so that the temperature of the second EC capacitor 204 increases while the temperature of the first EC capacitor 202 decreases, and vice-versa. Note that FIG. 1C provides a temperature scale to aid in interpreting the temperatures across each of the EC capacitors 202 and 204 during various system phases. It should be noted that while FIGS. 1A - 1C illustrate discrete sections within each of capacitors 202 and 204, the sections may indeed be of different EC materials tuned to work optimally at different temperatures or the sections may be of homogeneous EC material with the sections illustrating the temperature gradient across the homogeneous EC material.

FIG. 1A illustrates the regeneration phase of the system 200. During the regeneration phase, the first EC capacitor 202 is relatively hot (a high electric field is being applied) while the second EC capacitor 204 is relatively cold (a low electric field is being applied). Heat is transferred from the first EC capacitor 202 to the second EC capacitor 204. Note that each of the first and second EC capacitors 202 and 204 comprises a plurality electrocaloric materials 212. In the present configuration, the plurality of electrocaloric materials 212 are in a series, or side-by-side, orientation, however, the electrocaloric materials may also be layered or otherwise intermixed to produce a desired electrocaloric capacitor with desired electrocaloric function.

FIG. 1B illustrates the heat transfer phase of the system 200. During the heat transfer phase, the second EC capacitor 204 has been shifted, or displaced, relative to the fixed position of the first EC capacitor 202; either or both of the EC capacitors 202 and 204 may be displaced as appropriate to a specific application. Further, during the heat transfer phase, the second EC capacitor 204 is relatively hot (a high electric field is being applied) while the first EC capacitor 202 is relatively cold (a low electric field is being applied) so heat is transferred from the second EC capacitor 204 to the first EC capacitor 202. Additionally, in the heat transfer phase, the hot side of the second EC capacitor 204 is in contact with a heat sink 206 at a hot temperature, Tₕ, and the cold side of the first EC capacitor 202 is in contact with the object 208 to be cooled at a cold temperature, T_{c}, wherein T_{c} < Tₕ. The vertically-oriented arrows in FIGS. 1A and 1B indicate the direction of heat flow. It should be noted that the temperatures of the two capacitors 202 and 204 are not constant; there is a temperature gradient across each of capacitors 202 and 204 at all times, i.e., hotter on the right and cooler on the left.

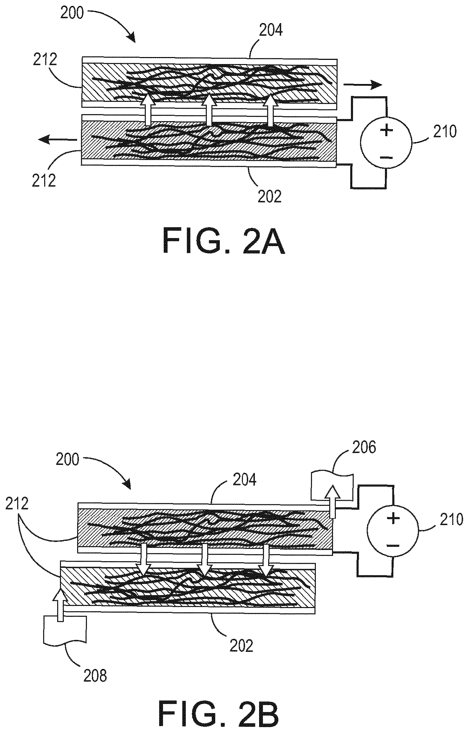

FIGS. 2A and 2B similarly illustrate system 200 with first EC capacitor 202 and second EC capacitor 204. FIG. 2A illustrates the regeneration phase of the system 200 with a voltage source 210 applying a high electric field to the first EC capacitor 202 while the second EC capacitor 204 is submitted to a low electric field, indicated by the absence of a voltage source, keeping the second EC capacitor 204 relatively cool. Side arrows indicate displacement motion of the EC capacitor(s) 202 and 204; either or both may be displaced. Vertically-oriented arrows indicate the direction of heat transfer from the first EC capacitor 202 to the second EC capacitor 204.

FIG. 2B illustrates the heat transfer phase of the system 200 wherein a high electric field, generated by voltage source 210, is applied to the second EC capacitor 204 and a low electric field, indicated by absence of a voltage source, is applied to the first capacitor 202. Heat sink 206 is again provided to the hot side of the second EC capacitor 204 and an object 208 to be cooled is again provided to the cold side of the first EC capacitor 202. The vertically-oriented arrows once again indicate the direction of heat transfer. FIGS. 2A and 2B further emphasize that each of the EC capacitors is fabricated from one or more EC materials 212 which may comprise an electrocaloric polymer, an electrocaloric co-polymer and/or an electrocaloric ceramic. Polymers generally have a low elastic modulus while ceramics can be brittle. As such, it may be necessary to reinforce the EC capacitors with metal foil or other supportive material.

The electrocaloric cooling via active regeneration system 200 of FIGS. 1 and 2 is a four stage cycle: (1) move one direction, e.g., move the second EC capacitor 204 to the left relative to the first EC capacitor 202; (2) increase the first of the two electric fields while keeping the other low, e.g., increase the electric field on the first EC capacitor 202; (3) move the other direction, e.g., move the second EC capacitor 204 to the right relative to the first EC capacitor 202; and (4) increase the second of the two electric field while keeping the other low, e.g., increase the electric field on the second EC capacitor 204. Each of the steps provides discrete motion and field changes; however, the system 200 may also be continuous.

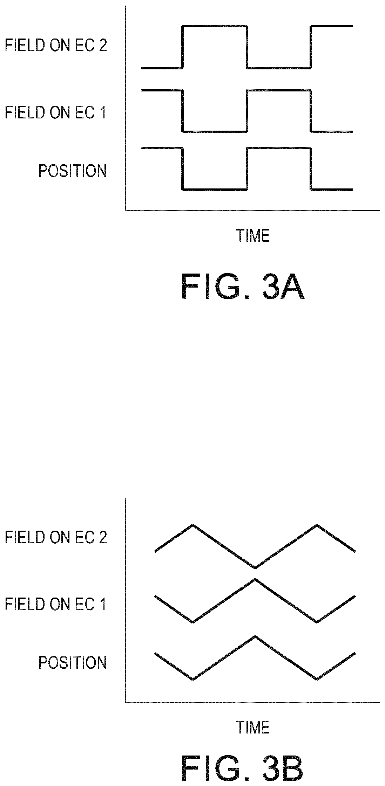

FIG. 3A depicts the waveforms associated with discrete motion and field changes and specifically illustrates the position, the electric field on the first EC capacitor 202, and the electric field on the second EC capacitor 204 relative to time. FIG. 3B depicts the waveforms associated with continuous motion and field changes and specifically illustrates the position, the electric field on the first EC capacitor 202, and the electric field on the second EC capacitor 204 relative to time. While FIG. 3B depicts a ramp waveform, it should be noted that other types of continuous waveforms, e.g., sinusoidal, are also possible as long as the system 200 is properly synchronized.

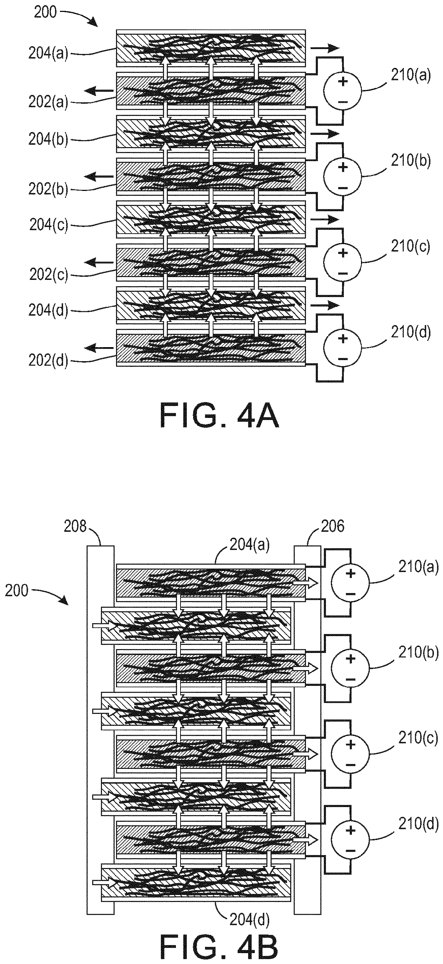

While FIGS. 1 and 2 have illustrated an example embodiment of the system 200 with only two EC capacitor layers (202 and 204), in practice, many layers of EC capacitors may be stacked. FIGS. 4A and 4B depict an example embodiment of system 200 where a plurality of first EC capacitors, e.g., 202 (a) - (d), are alternately layered with a plurality of second EC capacitors 204 (a) - (d). Once again, side arrows indicate the direction of motion and vertically-oriented arrows indicate the direction of heat transfer. The heat sink 206 and the object 208 to be cooled are also incorporated in the configuration of FIG. 4B. Any number of EC capacitor layers may be used as suitable to a specific application.

The motion of one or both of the EC capacitors 202 and 204 may be achieved with a motor and/or other actuator. In the case of stacked EC capacitors, the alternate EC capacitor layers may be attached to one another to provide substantially uniform and simultaneous movement. To enable good thermal contact between EC capacitor layers, and to reduce friction during motion, a layer of lubrication may be provided intermediate each EC capacitor layer. The lubricant may comprise a thermally conductive oil or, alternatively, may comprise any other suitable oil or liquid lubricant and/or a solid lubricant such as graphite, or an oil containing particles of thermally-conductive or thermally-insulating materials. The length of motion (or displacement distance) for the EC capacitance layers, the EC capacitance layer thickness, the electric field generating voltage, etc. are dependent on material and system choices and can thus be selected appropriate to a specific application.

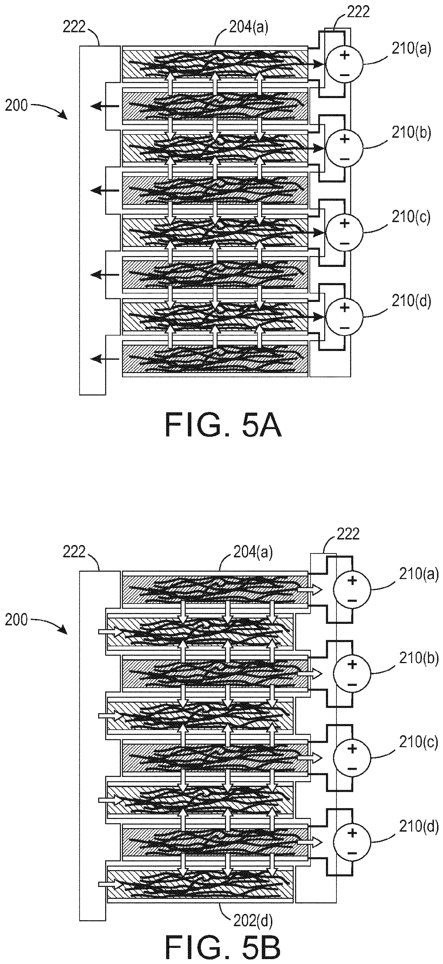

The heat sink 206 and the object 208 to be cooled may be connected to the system 200 in any manner suitable to a specific application. For example, the heat sink 206 and the object 208 may be connected to the system 200 through a liquid loop or other pumped liquid cooling. In another example embodiment, solid coupling such as in the form of metal blocks 222 may be used. See FIG. 5A where the EC capacitor layers 202 and 204 are positioned proximate metal blocks 222 and FIG. 5B where motion has caused EC capacitors to be in heat transfer contact with the metal blocks 222. The metal blocks 222 may, in turn, be coupled to the heat sink and the object to be cooled and/or an air heat exchanger or liquid loop, etc. While examples of system 200 connectors have been described herein, any other suitable heat exchange mechanism may be used to connect to the system 200.

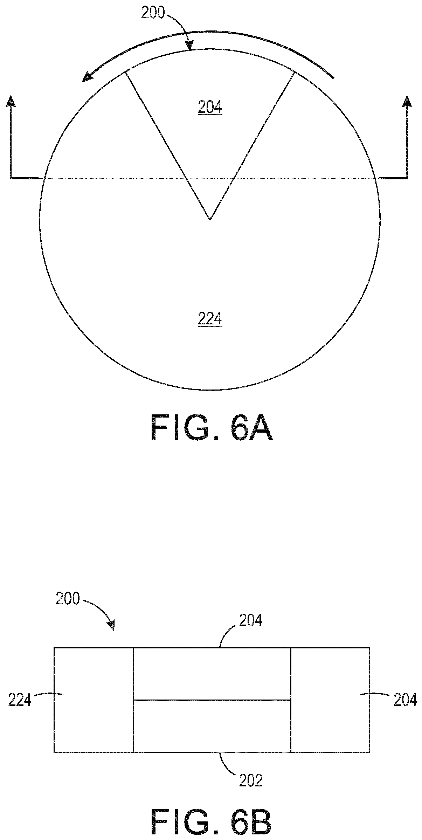

While the above disclosure has focused on linearly configured EC capacitors having linear reciprocal motion, it should be noted that the EC capacitors and their motion need not be linear or reciprocal. For example, the EC capacitors may be parts of disks, e.g., a wedge, half-disk, etc., and the motion may be rotational. See FIG. 6A which illustrates system 200 in a wedge configuration within a heat transfer material 224 where rotational motion is enabled. FIG. 6B is a sectional view of FIG. 6A illustrating the first EC capacitor 202 and the second EC capacitor 204, which is capable of rotational motion relative to the first EC capacitor 202.

The various embodiments of the system 200 described herein may provide the advantage of higher power density and/or higher temperature lift through more active material volume as well as higher efficiency through more effective heat transfer.

The core system described above may be configured as a pyroelectric heat engine. In the pyroelectric heat engine configuration, a pyroelectric material is substituted for the electrocaloric material. The pyroelectric material is selected to optimize heat energy harvesting. In contrast to the cooling configuration described above, heat is absorbed by the device at the hot side and rejected at the cold side. The high voltage supplies of the cooling configuration are replaced by loads in the heat engine configuration. The loads may be passive or active with impedances or voltages synchronized with the motion of the capacitors.

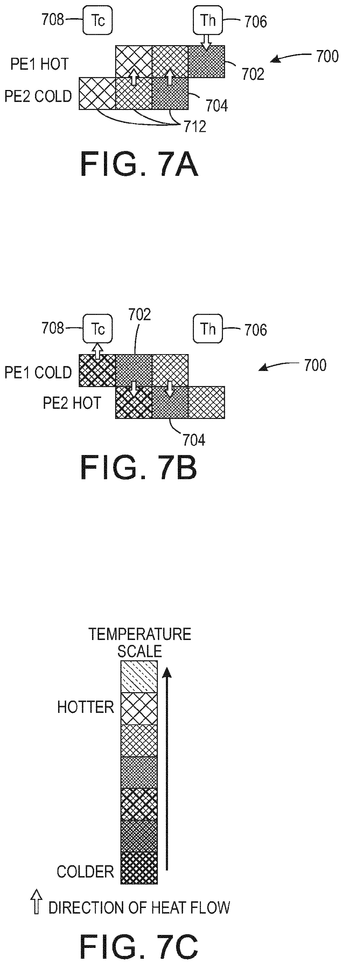

FIGS. 7A - 7C, illustrate a system 700 for pyroelectric power generation with active regeneration. The system 700 provides a first pyroelectric (PE) capacitor 702 and a second PE capacitor 704. A heat source 706 and a heat sink 708 are also provided. Note that FIG. 7C provides a temperature scale to aid in interpreting the temperatures across each of the PE capacitors 702 and 704 during various system phases. It should be noted that while FIGS. 7A - 7C illustrate discrete sections within each of capacitors 702 and 704, the sections may indeed be of different PE materials tuned to work optimally at different temperatures or the sections may be of homogeneous PE material with the sections illustrating the temperature gradient across the homogeneous PE material.

FIG. 7A illustrates one phase of a thermodynamic cycle within the pyroelectric heat engine. PE capacitor 702 is moved so that its hotter side is in communication with the heat source 706 while its voltage decreased such that it absorbs heat. At the same time, PE capacitor 704, which is in communication with PE capacitor 702, has its voltage increased so that it rejects heat to the PE capacitor 702. In the second phase, per FIG. 7B, PE capacitor 702 is moved so that its colder side is in communication with the heat sink 708. Its voltage is increased so that it rejects heat to the heat sink 708 as well as to PE capacitor 704, which has its voltage decreased. Because of the pyroelectric effect, the net electrical energy in terms of charge times voltage put into the system per cycle is less than the energy extracted. In this way, the device operates as a heat engine. Other configurations of pyroelectric capacitors, heat sources, and heat sinks are possible, and other pyroelectric energy harvesting cycles are also possible.

According to various embodiments described herein, the thermal switches may be used alone or in combination with the electrocaloric cooling via active regeneration systems described above. A thermal switch system alternately creates high thermal conductance paths on either side of an EC capacitor. In a thermal-switch-based system, the heat flux to and from capacitors with electrocaloric EC dielectrics is controlled with thermal switches. In a thermal switch based system, thermal conductance can be actively switched between a high and a low value.

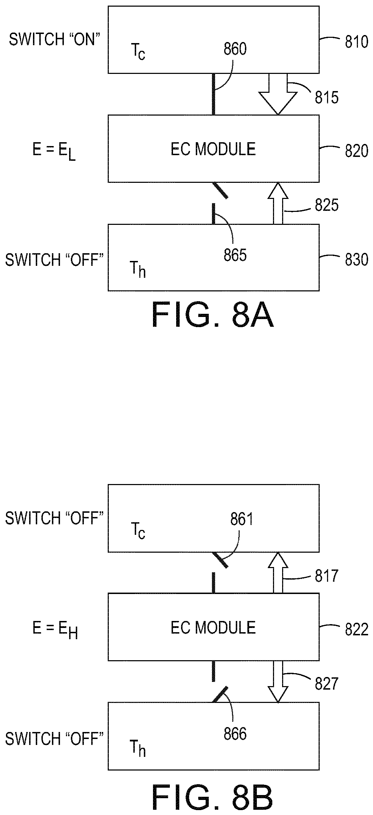

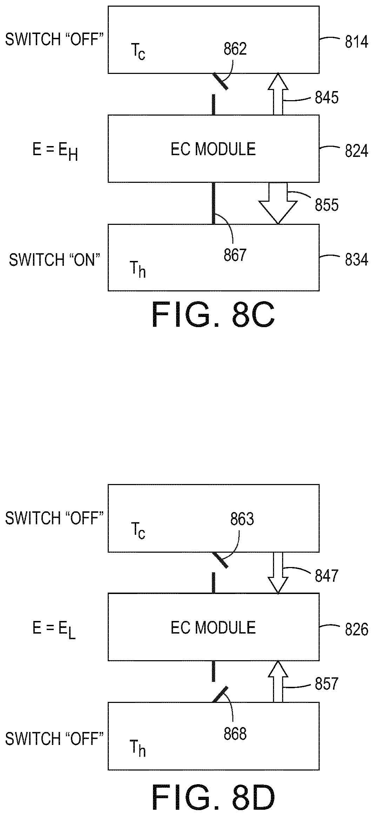

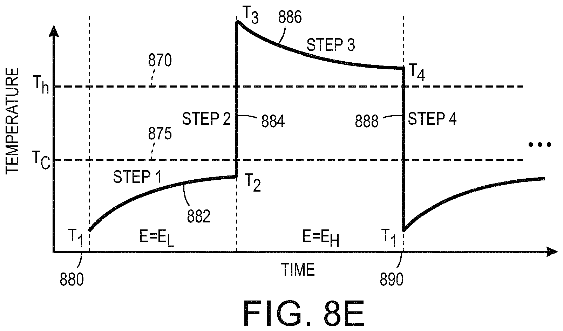

FIGS. 8A -8E illustrate the process of using thermal switches for an electrocaloric cooling system. First, in FIG. 8A, a null and/or low electric field (E_{L}) is applied across the EC capacitor module 820. The EC capacitor system has a cold bath side 810 having temperature T_{c} 875 and a hot bath side 830 having temperature Tₕ. In the first step, the cold side 810 thermal switch 860 of the EC capacitor module 820 is in the closed (on) position and the hot side 830 thermal switch 865 of the EC capacitor 820 is in the open (off) position. When the switch is closed, the circuit is complete and thus the thermal switch is active. When the switch is open, the circuit is incomplete and the thermal switch is in an inactive state. The average temperature of the EC capacitor module 820 (T_{EC}) begins at a first temperature (T₁) 880 in FIG. 8E, where T₁ is less than T_{c}. The temperature of the EC capacitor module 820 increases to temperature T₂ 882 as the EC module 820 absorbs heat 815 from the cold bath as shown in FIG. 8C. A small amount of heat may be absorbed 825 from the hot side of the EC capacitor module because of the finite off resistance of the thermal switch.

The second state of the process is shown in FIG. 8B where both thermal switches 861, 866 are turned to an off (open) state. The electric field applied to the EC capacitor module 822 is switched to a high value (E_{H}). The high electric field value causes a temperature increase from T₂ to T₃ 884 as shown in FIG. 8E caused by the electrocaloric effect. The increase in temperature from T₂ to T₃ 884 happens substantially instantaneously as the electric field increase as shown in FIG. 8C. According to various implementations, T₃ is greater than the hot bath temperature Tₕ 870. There may be a small amount of heat transfer between the EC module and the hot and/or cold sides because of the finite off resistance of the switch as shown by arrows 817 and 827. The amount of heat transfer is limited by the short duration of the second state of the process.

While maintaining the field at E_{H}, the thermal switch 867 for the hot side 834 of the EC capacitor module 824 is turned on (closed) as shown in FIG. 8C. Because the EC capacitor module 824 is at a higher temperature than the temperature of the hot bath, the temperature of the EC module decreases from T₃ to T₄ 886 as heat from the EC module is absorbed 855 by the hot bath. Some heat may also leak 845 to the cold side 814 of the EC module 824 even though the thermal switch 862 on the cold side is in an open state due to the finite off resistance of the thermal switch.

In the final step shown in FIG. 8D, both heat switches are turned off (open) 863, 868 and the electric field is returned to E_{L}. This decrease in the electric field leads to a substantially instantaneous temperature decrease 888 in the EC capacitor module 826 from T₄ back to T₁ 890 as shown in FIG. 8E. While it is described that the capacitor module returns to temperature T₁, it is to be understood that the final temperature may be a different temperature than the initial temperature (T₁). Again, there may be a small amount of heat transfer between the EC module and the hot and/or cold sides because of the finite off resistance of the switch as shown by arrows 847 and 857. The amount of heat transfer is limited by the short duration of the final state of the process.

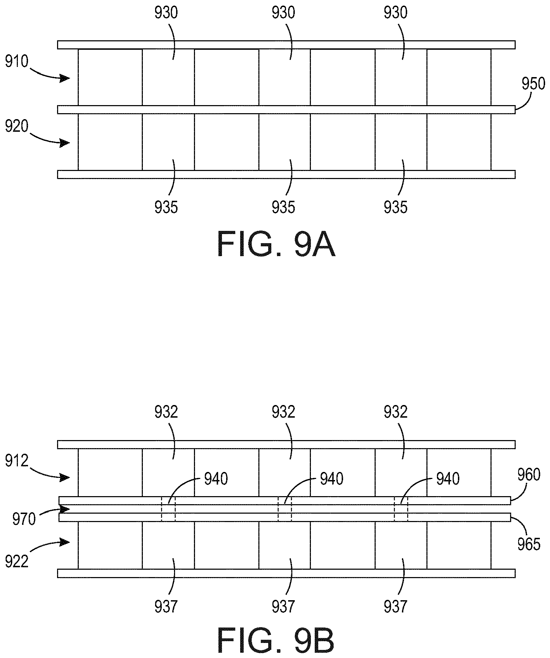

FIGS. 9A and 9B illustrate an EC capacitor system utilizing thermal switches and/or active regeneration in accordance with embodiments described herein. The capacitors of the EC capacitor system may be single layer or multilayer capacitors. In some cases, the EC capacitors are multilayer chip capacitors. The capacitors of the EC capacitor system may represent an array of capacitors. FIGS. 9A and 9B show a first row of EC capacitors 910, 912 and a second row of EC capacitors 920, 922. The capacitors of the first row of EC capacitors 910, 912 are separated by a first set of insulation regions 930, 932 and the capacitors of the second row of EC capacitors 920 are separated by a second set of insulation regions 935, 937. The insulation regions 930, 932, 935, 937 may have low thermal conductivity. For example, the insulation regions may have a thermal conductivity less than about 0.02 to 1 W/mK. The thermal conductance between adjacent capacitors in each row may be related to the magnitude of spacing between the capacitors of a capacitor row. A higher amount of spacing causes a lower thermal conductance. This spacing may be balanced with a desired size of the device and desired amount of thermal conductance between capacitors of a capacitor row. The spacing between the capacitors may be about 100 µm to 1 cm, for example. In some cases, the spacing between at least some adjacent capacitors in a system is less than 100 µm and/or greater than 1 cm depending on the specific application requirements. The insulation regions prevent heat from transferring laterally in the device (i.e., prevent heat from transferring between capacitors of a single row or layer of the device). The amount of lateral thermal conductance may also depend on the material of the insulation regions. The insulation regions may comprise air, vacuum, aerogel, and/or a gas such as xenon, for example. While FIGS. 9A-9B show that the insulation regions between the capacitors of a capacitor row are about the same magnitude, it is to be understood that the spacing and/or capacitor width may be different as long as the magnitude of the sum of the spacing and the width of the capacitor is substantially the same for all or a portion of the capacitors in the system.

According to the invention, a first electric field is applied to the first row of EC capacitors 910, 912 and a second electric field is applied to the second row of EC capacitors 920, 922. The first and second electric fields are complementary such that when the first and second electric fields are applied to their respective EC capacitor rows, the temperature of the first row of EC capacitors 910, 912 rises in accordance with a rising first electric field and the temperature of the second row of EC capacitors 920, 922 decreases in accordance with a decreasing second electric field or the temperature of the first row of EC capacitors 910, 912 decreases in accordance with a decreasing first electric field and the temperature of the second row of EC capacitors 920, 922 increases in accordance with a rising second electric field.

According to the invention, there is at least one support layer 950, 960, 965 between the two rows of EC capacitors 912, 922 as shown in FIG. 9A and FIG. 9B. The at least one support layer may be a structural support layer and/or structure. The support structure 950, 960, 965 does one or more of the following: provides mechanical support for the capacitors, provides a smooth surface for sliding against another capacitor layer, is thermally insulating so as to maintain the low thermal conductance between adjacent capacitors, and/or allows good thermal contact between the two rows of capacitors. The structural support layer may have as low thermal conductivity as possible while being as thin as possible. For example, the structural support layer may be about 50 µm to 2 mm thick. In some cases, the structural support layer comprises a glass, a polymer, a ceramic, and/or a printed circuit board (PCB) material such as FR-4, for example.

In FIG. 9B, a first support layer 960 is shown proximate the first row of EC capacitors 912 and a second support structure 965 is shown proximate to the second row of EC capacitors 922. In some cases, the respective side of the first support structure and/or the second support structure that is facing the other support structure is substantially flat such as to facilitate lateral motion between the EC capacitor rows. The facilitation of lateral motion between the EC capacitor rows may be accomplished by polishing at least a portion of the support structures. In some cases, there is a lubricating layer 970 between the structural support layers to facilitate lateral motion between the EC capacitor rows 912, 922. The lubricating layer may comprise a thermally conductive oil and/or any other suitable oil or liquid lubricant and/or a solid lubricant such as graphite. In some cases, the lubricating layer comprises an oil containing particles of thermally-conductive or thermally-insulating materials. The lubricating layer may have a low thermal conductivity and may be about 1µm to 100 µm thick. In some cases, the support structures 960, 965 have low thermal conductivity in a lateral direction and/or may be thermally conductive vertically such as to allow heat transfer vertically between the rows.

According to the invention, one or more vias and/or shunts 940 through at least one of the structural supports 960, 965 and the lubricating layer 970 are provided which may further allow for the vertical heat transfer. Laser and/or mechanical drilling may be used to create the vias. In some cases, the vias are created using a mechanical drill, laser drill, etching, and/or a through-glass process. The vias may be plated and/or filled with a thermally conductive material to facilitate a vertical thermal conductivity between the capacitor layers. For example, the vias may be filled with a metal. In some embodiments, the support structures 960, 965 may be PCBs and the thermal vias plated or filled electrical vias. While FIG. 9B shows a single via within the insulation regions, it is to be understood that more than one via may be present through the structural supports within each insulation region. The one or more vias may have a thermal conductivity greater than about 50 to 400 W/mK, for example.

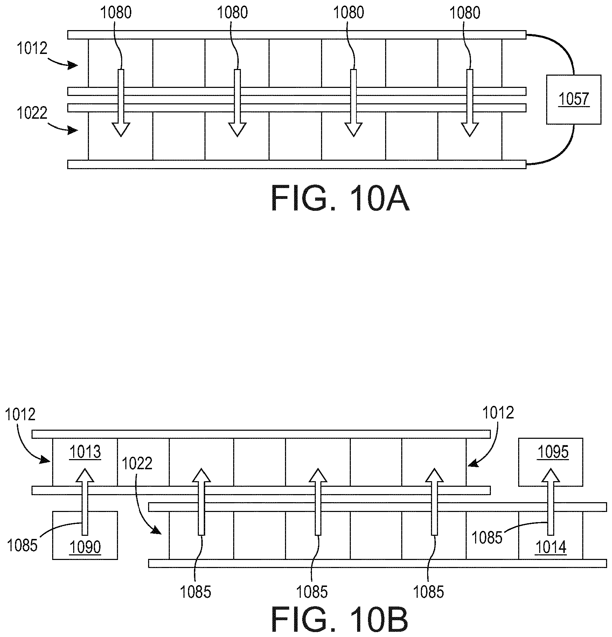

As described above, the rows of EC capacitors may be configured to move laterally with respect to each other. In this case, the capacitor system has at least two positions. FIGS. 10A and 10B show the two positions of the EC capacitor system. In FIG. 10A, a high electric field is applied to the first row of EC capacitors 1012. The high electric field causes the first row of EC capacitors 1012 to have a relatively high temperature in comparison with the second row of EC capacitors 1022. Arrows 1080 represent heat moving between the relatively warmer first row of EC capacitors 1012 to the relatively cooler second row of EC capacitors 1022.

At least one of the first row of EC capacitors 1012 and the second row of EC capacitors 1022 are moved laterally with respect to each other to reach the second possible position for the capacitor system as shown in FIG. 10B. The motion of one or both of the EC capacitors rows 1012, 1022 may be achieved with a motor or other actuator such as a voice coil coupled to one or both of the capacitor rows 1012, 1022. For example, FIG. 10A shows an actuator 1057 configured to shift one or both of the first EC capacitor row 1012 and the second EC capacitor row 1022 relative to the opposite row. According to various implementations, the electric fields are reversed while shifting and/or after the capacitor rows have shifted into the second position such that a relatively high electric field is applied to the second row of EC capacitors 1022 while a low and/or null electric field is applied to the first set of EC capacitors 1012. The reversed electric fields causes the temperature of the first row of EC capacitors 1012 to decrease and the temperature of the second set of EC capacitors 1022 to increase.

While in the second position, heat is transferred from the second set of EC capacitors 1022 to the first set of EC capacitors 1012 as indicated by arrows 1085. Heat source 1090 also transfers heat 1085 to the corresponding capacitor 1013 in the first row of EC capacitors 1012. Capacitor 1014 of the second set of EC capacitors 1022 transfers heat to a heat sink 1095. The heat source and the heat sink may be coupled to different capacitor rows or to the same capacitor row. For example, FIG. 10B illustrates that the heat sink 1090 is thermally coupled to a corresponding 1013 capacitor of the first row of EC capacitors 1012 and the heat sink is thermally coupled to a corresponding capacitor 1014 of the second row of EC capacitors 1022.

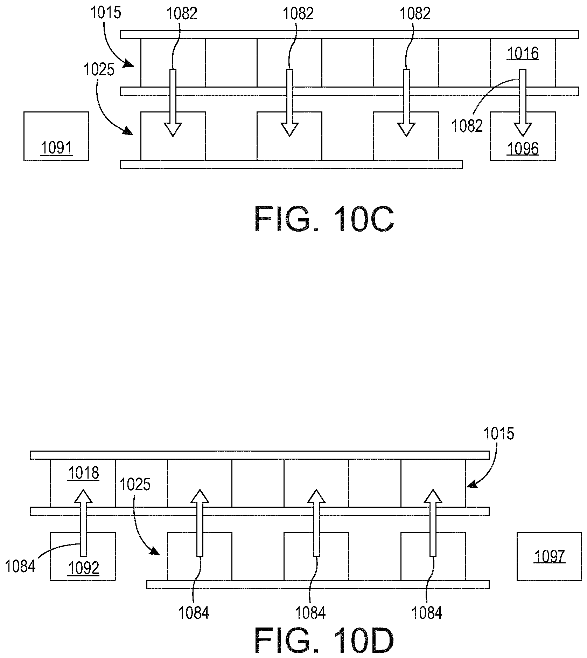

In some cases, the heat sink and the heat source are coupled to the same capacitor row. For example, FIGS. 10C and 10B illustrate an example in which there is a different number of capacitors in a first capacitor row 1015 than in the second capacitor row 1025. In this case, when the capacitors are in a first position, heat is transferred 1082 from the first row 1015 to the second row 1025. A heat sink 1096 is thermally coupled to a corresponding capacitor 1016 in the first row 1015. In the first position shown in FIG. 10C the heat source 1091 does not have a corresponding capacitor and thus does not directly transfer heat into the system. In the second position shown in FIG. 10D, heat is transferred 1084 from the second capacitor row 1025 to the first capacitor row 1015. The heat source 1092 transfers heat to a corresponding capacitor 1018 in the first capacitor row 1015. In the second position shown in FIG. 10D the heat sink 1097 does not have a corresponding capacitor and thus does not directly absorb heat from the system. According to various implementations, the heat transfer between the heat source and capacitor and capacitor and the heat sink may occur via a direct connection and/or may occur via a heat transfer fluid and/or other interface.

According to various embodiments, after a predetermined period of time has passed, the capacitor system returns to the first position as shown in FIG. 10A and/or FIG. 10C using the actuator 1057. The predetermined period of time may be based on the time constant of heat transfer from one set of capacitors to the other set of capacitors and/or may involve other considerations. While FIG. 10B illustrates the insulation regions aligned while in the second position, it is to be understood that the insulation regions may be offset while in the second position such that the insulation regions do not line up perfectly. Shifting between the first position and the second position may occur intermittently or continuously in correspondence with the raising and lowering of the first and second electric fields.

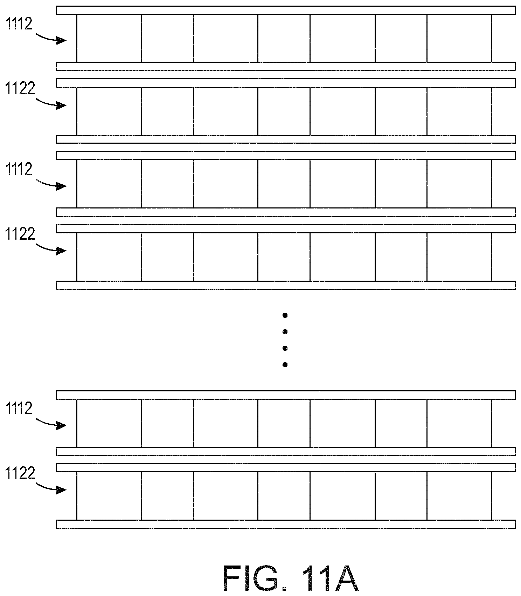

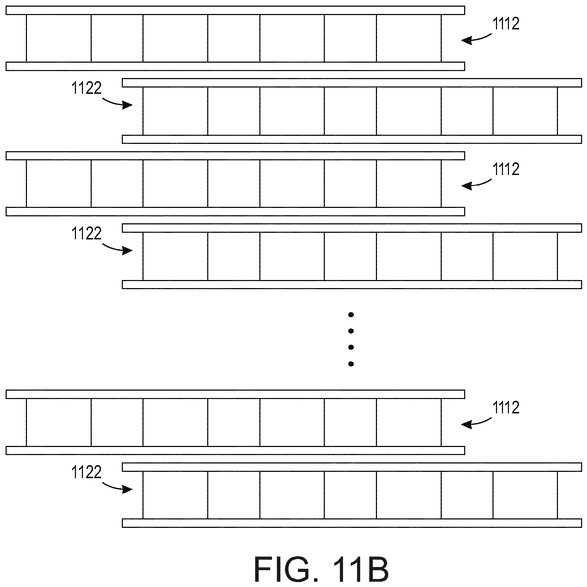

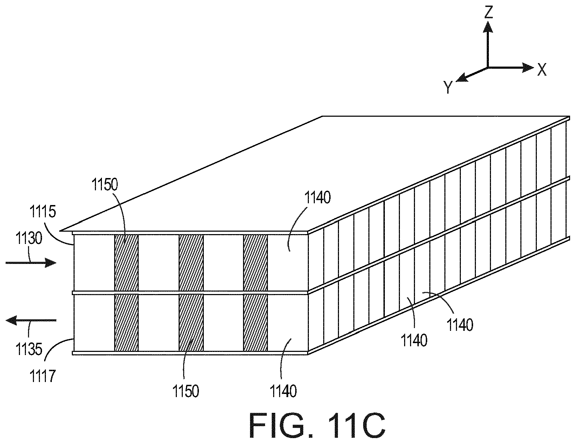

While FIGS. 10A and 10B illustrated examples having only two EC capacitor layers 1012, 1022, in some cases, more than one layer of capacitor sets having a first and second row of capacitors may be stacked. FIGS. 11A and 11B show embodiments having a plurality of first EC capacitor rows 1112 and a plurality of second EC capacitor rows 1022. The first 1012 and second 1022 capacitor layers are stacked in an alternating pair configuration of a first EC capacitor row 1112 and a second EC row 1122. According to various implementations, an actuator is configured to substantially synchronously shift the like electrocaloric layers relative to one another as shown in FIG. 11B. In some cases, the actuator is configured to shift the like electrocaloric capacitor layers in the alternating pair configuration intermittently or continuously in correspondence with the raising and lowering of the first and second electric fields. In some embodiments, the actuator is configured to shift the like EC capacitor layers in the alternating pair configuration according to a linear or rotational motion. FIG. 11C shows a capacitor device 303 comprising a three-dimensional array of a first EC capacitor row 1115 and a second row EC capacitor row 1117 having insulation regions 1150 disposed between EC capacitors 1140. While, FIG. 11C shows two three-dimensional rows of capacitors, it is to be understood that there can be more than two rows as illustrated in FIGS. 11A and 11B. At least one of the first row of EC capacitors 1015 and the second row of EC capacitors 1017 are moved laterally with respect to each other to reach the second possible position according to at least one of arrow 1130 and arrow 1135 similarly to the lateral shifting described in FIGS. 10A and 10B. According to various implementations, insulation regions are not present between rows of capacitors in the direction normal to the motion. This is shown in FIG. 11C where the rows of capacitors are continuous in one dimension (along the y-axis) and have insulation regions in the other dimension (along the x-axis).

According to various implementations described herein, each capacitor may be a multilayer capacitor. In some cases, the capacitor systems described herein may include a group of capacitors and/or multilayer capacitors combined into a capacitor module. The capacitor modules described herein may have dimensions of about 11.2 mm x 2.6 mm x 3.3 mm using seven standard packaged capacitors, for example. Standard individual capacitor dimensions may be 1.6 mm × 2.6 mm × 3.2 mm. According to various implementations, using standard-packaged capacitors, e.g., 0402, 0603, or 1206 surface mount package capacitors, to form an EC capacitor that can satisfy the volume, power, and geometry requirements of an EC cooling or heat pump system may be used.

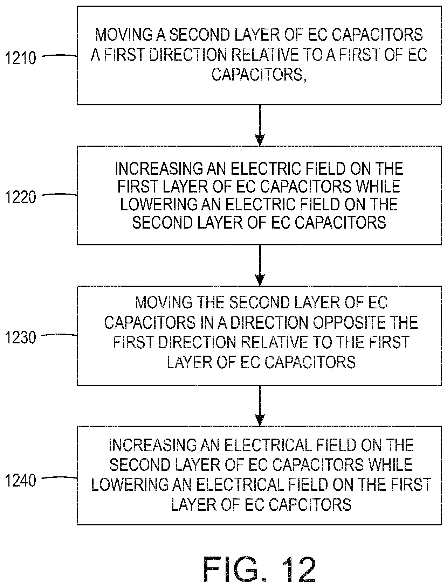

FIG. 12 illustrates a process for cooling using EC capacitors in accordance with embodiments described herein. A second layer of EC capacitors is moved 1210 a first direction relative to a first layer of EC capacitors. According to various embodiments, the capacitors of the first layer of EC capacitors are separated by a first insulation region and the capacitors of the second layer of electrocaloric capacitors are separated by a second insulation region. An electric field on the first layer of EC capacitors is increased 1220 while lowering an electric field on the second layer of EC capacitors causing heat to be transferred from the first layer of EC capacitors to the second layer of EC capacitors. The second layer of EC capacitors is moved 1230 in a direction opposite the first direction relative to the first layer of EC capacitors. An electric field is increased 1240 on the second layer of EC capacitors while lowering an electric field on the first layer of EC capacitors causing heat to be transferred from the second layer of EC capacitors to the first layer of EC capacitors. According to various embodiments described herein, a support layer (e.g., a structural support layer) is disposed between the first layer of EC capacitors and the second layer of EC capacitors. In some cases, heat is transferred vertically between the first and second capacitor layers using at least one via disposed through the support layer.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

Various modifications and alterations of the embodiments discussed above will be apparent to those skilled in the art, and it should be understood that this invention is not limited to the illustrative embodiments set forth herein but solely limited by the appended claims. The reader should assume that features of one disclosed embodiment can also be applied to all other disclosed embodiments unless otherwise indicated.

## Claims

1. A system comprising:
a first row of electrocaloric capacitors (910, 912) separated by a first insulation region (930, 932);
a second row of electrocaloric capacitors (920, 922) proximate the first row of electrocaloric capacitors (910, 912) wherein the proximity enables heat transfer between the first and second rows of electrocaloric capacitors, the capacitors of the second row of electrocaloric capacitors (920, 922) separated by a second insulation region (935, 937);
a support layer (950, 960, 965) between the first row of electrocaloric capacitors (910, 912) and the second row of electrocaloric capacitors (920, 922); and
an actuator (1057) configured to shift the first row of electrocaloric capacitors relative to the second row of electrocaloric capacitors;
wherein a first electric field is applied to the first row of electrocaloric capacitors and a second electric field is applied to the second row of electrocaloric capacitors, and
wherein the first and second electric fields are complementary such that when the first and second electric fields are applied to their respective electrocaloric capacitors the temperature of the first row of electrocaloric capacitors rises in accordance with a rising first electric field and the temperature of the second row of electrocaloric capacitors decreases in accordance with a decreasing second electric field or the temperature of the first row of electrocaloric capacitors decreases in accordance with a decreasing first electric field and the temperature of the second row of electrocaloric capacitors increases in accordance with a rising second electric field, and
wherein the actuator is configured to shift the first row of electrocaloric capacitors relative to the second row of electrocaloric capacitors in correspondence with the raising and lowering of the first and second electric fields,
**characterised by** comprising at least one thermally conductive via (940) through the support layer (950, 960, 965);

2. The system of claim 1, wherein the support layer comprises a thermally insulating material.

3. A method of cooling comprising:
moving a second row of electrocaloric capacitors (920, 922) a first direction relative to a first row of electrocaloric capacitors (910, 912), the capacitors of the first row of electrocaloric capacitors separated by a first insulation region (930, 932) and the capacitors of the second row of electrocaloric capacitors separated by a second insulation region (935, 937);
increasing an electric field on the first row of electrocaloric capacitors (910, 912) while lowering an electric field on the second row of electrocaloric capacitors (920, 922) whereby heat is transferred from the first row of electrocaloric capacitors (910, 912) to the second row of electrocaloric capacitors (920, 922);
transferring heat vertically between the first and second capacitor rows using at least one via (940) disposed through a support layer (950, 960, 965) between the first row of electrocaloric capacitors (910, 912) and the second row of electrocaloric capacitors (920, 922);
moving the second row of electrocaloric capacitors (920, 922) in a direction opposite the first direction relative to the first row of electrocaloric capacitors (910, 912); and
increasing an electric field on the second row of electrocaloric capacitors (920, 922) while lowering an electric field on the first row of electrocaloric capacitors (910, 912) whereby heat is transferred from the second row of electrocaloric capacitors (920, 922) to the first row of electrocaloric capacitors (910, 912).

## Patentansprüche

1. System, umfassend:
eine erste Reihe von elektrokalorischen Kondensatoren (910, 912), die durch einen ersten Isolierbereich (930, 932) getrennt sind;
eine zweite Reihe von elektrokalorischen Kondensatoren (920, 922) in der Nähe der ersten Reihe von elektrokalorischen Kondensatoren (910, 912), wobei die Nähe eine Wärmeübertragung zwischen der ersten und zweiten Reihe von elektrokalorischen Kondensatoren ermöglicht, wobei die Kondensatoren der zweiten Reihe von elektrokalorischen Kondensatoren (920, 922) durch einen zweiten Isolierbereich (935, 937) getrennt sind;
eine Trägerschicht (950, 960, 965) zwischen der ersten Reihe von elektrokalorischen Kondensatoren (910, 912) und der zweiten Reihe von elektrokalorischen Kondensatoren (920, 922); und
ein Betätigungselement (1057), das dazu konfiguriert ist, die erste Reihe von elektrokalorischen Kondensatoren relativ zu der zweiten Reihe von elektrokalorischen Kondensatoren zu verschieben;
wobei ein erstes elektrisches Feld an die erste Reihe von elektrokalorischen Kondensatoren angelegt wird und ein zweites elektrisches Feld an die zweite Reihe von elektrokalorischen Kondensatoren angelegt wird, und
wobei das erste und zweite elektrische Feld komplementär sind, so dass, wenn das erste und zweite elektrische Feld an ihre jeweiligen elektrokalorischen Kondensatoren angelegt werden, die Temperatur der ersten Reihe von elektrokalorischen Kondensatoren entsprechend einem ansteigenden ersten elektrischen Feld steigt und die Temperatur der zweiten Reihe von elektrokalorischen Kondensatoren entsprechend einem abnehmenden zweiten elektrischen Feld abnimmt oder die Temperatur der ersten Reihe von elektrokalorischen Kondensatoren entsprechend einem abnehmendem ersten elektrischen Feld abnimmt und die Temperatur der zweiten Reihe von elektrokalorischen Kondensatoren entsprechend einem ansteigenden zweiten elektrischen Feld ansteigt, und
wobei das Betätigungselement dazu konfiguriert ist, die erste Reihe von elektrokalorischen Kondensatoren relativ zu der zweiten Reihe von elektrokalorischen Kondensatoren entsprechend dem Anstieg oder der Abnahme des ersten und zweiten elektrischen Feldes zu verschieben,
**dadurch gekennzeichnet, dass** es mindestens eine wärmeleitende Durchkontaktierung (940) durch die Trägerschicht (950, 960, 965) umfasst.

2. System nach Anspruch 1, wobei die Trägerschicht ein wärmeleitendes Material umfasst.

3. Kühlverfahren, umfassend:
Bewegen einer zweiten Reihe von elektrokalorischen Kondensatoren (920, 922) in einer ersten Richtung relativ zu einer ersten Reihe von elektrokalorischen Kondensatoren (910, 912), wobei die Kondensatoren der ersten Reihe von elektrokalorischen Kondensatoren durch einen ersten Isolierbereich (930, 932) getrennt sind, und die Kondensatoren der zweiten Reihe von elektrokalorischen Kondensatoren durch einen zweiten Isolierbereich (935, 947) getrennt sind;
Erhöhen eines elektrischen Feldes an der ersten Reihe von elektrokalorischen Kondensatoren (910, 912) bei gleichzeitigem Verringern eines elektrischen Feldes an der zweiten Reihe von elektrokalorischen Kondensatoren (920, 922), wodurch Wärme von der ersten Reihe von elektrokalorischen Kondensatoren (910, 912) auf die zweite Reihe von elektrokalorischen Kondensatoren (920, 922) übertragen wird;
Übertragen von Wärme vertikal zwischen den ersten und zweiten Kondensatorreihen unter Verwendung von mindestens einer Durchkontaktierung (940), die durch eine Trägerschicht (950, 960, 965) zwischen der ersten Reihe von elektrokalorischen Kondensatoren (910, 912) und der zweiten Reihe von elektrokalorischen Kondensatoren (920, 922) angeordnet ist;
Bewegen der zweiten Reihe von elektrokalorischen Kondensatoren (920, 922) in einer Richtung entgegengesetzt zu der ersten Richtung relativ zu der ersten Reihe von elektrokalorischen Kondensatoren (910, 912); und
Erhöhen eines elektrischen Feldes an der zweiten Reihe von elektrokalorischen Kondensatoren (920, 922) bei gleichzeitigem Verringern eines elektrischen Feldes an der ersten Reihe von elektrokalorischen Kondensatoren (910, 912), wodurch Wärme von der zweiten Reihe von elektrokalorischen Kondensatoren (920, 922) auf die erste Reihe von elektrokalorischen Kondensatoren (910, 912) übertragen wird;

## Revendications

1. Système comprenant :
une première rangée de condensateurs électrocaloriques (910, 912) séparés par une première région d'isolation (930, 932) ;
une deuxième rangée de condensateurs électrocaloriques (920, 922) proche de la première rangée de condensateurs électrocaloriques (910, 912), dont la proximité permet un transfert de chaleur entre les première et deuxième rangées de condensateurs électrocaloriques, les condensateurs de la deuxième rangée de condensateurs électrocaloriques (920, 922) étant séparés par une deuxième région d'isolation (935, 937) ;
une couche de support (950, 960, 965) entre la première rangée de condensateurs électrocaloriques (910, 912) et la deuxième rangée de condensateurs électrocaloriques (920, 922) ; et
un actionneur (1057) configuré pour décaler la première rangée de condensateurs électrocaloriques par rapport à la deuxième rangée de condensateurs électrocaloriques ;
dans lequel un premier champ électrique est appliqué à la première rangée de condensateurs électrocaloriques et un deuxième champ électrique est appliqué à la deuxième rangée de condensateurs électrocaloriques, et
dans lequel les premier et deuxième champs électriques sont complémentaires de façon que, lorsque les premier et deuxième champs électriques sont appliqués à leurs condensateurs électrocaloriques respectifs, la température de la première rangée de condensateurs électrocaloriques augmente avec l'augmentation du premier champ électrique et la température de la deuxième rangée de condensateurs électrocaloriques diminue avec la diminution du deuxième champ électrique ou la température de la première rangée de condensateurs électrocaloriques diminue avec la diminution du premier champ électrique et la température de la deuxième rangée de condensateurs électrocaloriques augmente avec l'augmentation de la deuxième rangée de condensateurs électrocaloriques, et
dans lequel l'actionneur est configuré pour décaler la première rangée de condensateurs électrocaloriques par rapport à la deuxième rangée de condensateurs électrocaloriques en correspondance avec l'augmentation et la diminution des premier et deuxième champs électriques,
**caractérisé en ce qu'**il comprend au moins un passage thermiquement conducteur (940) à travers la couche de support (950, 960, 965).

2. Système selon la revendication 1, dans lequel la couche de support comprend un matériau thermiquement isolant.

3. Procédé de refroidissement comprenant :
le déplacement d'une deuxième rangée de condensateurs électrocaloriques (920, 922) dans une première direction par rapport à une première rangée de condensateurs électrocaloriques (910, 912), les condensateurs de la première rangée de condensateurs électrocaloriques étant séparés par une première région d'isolation (930, 932) et les condensateurs de la deuxième rangée de condensateurs électrocaloriques étant séparés par une deuxième région d'isolation (935, 937) ;
l'augmentation d'un champ électrique sur la première rangée de condensateurs électrocaloriques (910, 912) en même temps que la diminution d'un champ électrique sur la deuxième rangée de condensateurs électrocaloriques (920, 922), moyennant quoi de la chaleur est transférée de la première rangée de condensateurs électrocaloriques (910, 912) à la deuxième rangée de condensateurs électrocaloriques (920, 922) ;
le transfert de chaleur verticalement entre les première et deuxième rangées de condensateurs par utilisation d'au moins un passage (940) disposé à travers une couche de support (950, 960, 965) entre la première rangée de condensateurs électrocaloriques (910, 912) et la deuxième rangée de condensateurs électrocaloriques (920, 922) ;
le déplacement de la deuxième rangée de condensateurs électrocaloriques (920, 922) dans une direction opposée à la première direction par rapport à la première rangée de condensateurs électrocaloriques (910, 912) ; et
l'augmentation d'un champ électrique sur la deuxième rangée de condensateurs électrocaloriques (920, 922) en même temps que la diminution d'un champ électrique sur la première rangée de condensateurs électrocaloriques (910, 912), moyennant quoi de la chaleur est transférée de la deuxième rangée de condensateurs électrocaloriques (920, 922) à la première rangée de condensateurs électrocaloriques (910, 912).
